# EUROPÄISCHE PATENTSCHRIFT

(11) **EP 2 065 952 B1**
(45) Veröffentlichungstag und Bekanntmachung des Hinweises auf die Patenterteilung: **10.02.2010**
(21) Anmeldenummer: 07405336.4
(22) Anmeldetag: 27.11.2007
(51) Int. Cl.: H01M 2/10, H01M 2/02

(54) **Batterie**
Battery
Batterie

(43) Veröffentlichungstag der Anmeldung: 03.06.2009
(73) Patentinhaber: Swissbatt AG, 9050 Appenzell (CH)
(72) Erfinder: Wyser, Maurus, 9050 Appenzell (CH)
(74) Vertreter: Rüfenacht, Philipp Michael

(56) Entgegenhaltungen:
- EP-A- 1 244 169
- US-A1- 2003 064 292
- US-A1- 2004 248 000

## Beschreibung

### Technisches Gebiet

Die Erfindung betrifft eine Batterie umfassend ein Batteriegehäuse und eine im Batteriegehäuse aufgenommene Elektrode. Die Erfindung betrifft weiter ein Gerät mit einer solchen Batterie.

### Stand der Technik

Die Verbreitung elektronischer Geräte nimmt ständig zu. Gleichzeitig können diese in immer kompakterer Form hergestellt werden. Bei solchen miniaturisierten Geräten, z. B. bei jenen, die vom Benutzer während längerer Zeit oder dauerhaft mitgetragen werden (wie Hörgeräte, Insulinpumpen oder andere Medikamentenspender usw.) ist wichtig, dass die Batterie zur Stromversorgung ebenfalls möglichst kompakt und leicht, gleichzeitig aber auch leistungsfähig ist.

Herkömmlich werden für solche Geräte Akkus mit Standard-Bauformen und Metallgehäuse verwendet. Diese Akkus werden direkt oder als potentialfreies Paket mit integrierter Schutzschaltung in eine dafür vorgesehene Öffnung des Geräts eingelegt. Der Platzbedarf für Akku und Akkufach und das Gewicht des Akku-Metallgehäuses schränken das Design für verschiedene Applikationen ein.

Hohe Energiedichten lassen sich mit gewickelten Batterien erzielen, wie sie z. B. in der EP 0 144 757 (GTE Government Systems) oder der US 5,556,722 (Sanyo) beschrieben sind. In einem dichten Gehäuse ist ein Wickel ("jelly roll") mit einem aktiven Kathoden- und einem aktiven Anodenband untergebracht. Die gemeinsam spiralförmig aufgewickelten Bänder sind durch einen Separator elektrisch getrennt, wobei ein flüssiger Elektrolyt oder ein Polymer als Ionenleiter dient. Elektrische Leiter verbinden die Bänder mit aussen am Gehäuse angeordneten Stromanschlüssen (Minus- und Pluspol der Batterie).

Aus der EP 1 100 138 A1 (Wyon AG) ist eine gewickelte Batterie bekannt, welche einen raumsparenden Aufbau aufweist und damit eine grosse Kapazität mit geringem Raumbedarf ermöglicht. Der Stromanschluss ist dabei durch in das Gehäuse hinein ragende Röhrchen gebildet, welche gleichzeitig als Träger für den mit Elektrolyt getränkten Elektrodenwickel dienen.

Aus der EP 1 398 841 A1 (Wyon AG) ist eine weitere gewickelte Batterie bekannt, die eine verschraubte gasdichte Kontaktdurchführung aufweist. Diese Konstruktion ist kompakt, sie eignet sich zudem besonders gut für Akkus mit Kunststoffgehäusen, die gegenüber herkömmlichen Akkus mit Metallgehäusen mit einem geringeren Gewicht hergestellt werden können.

### Darstellung der Erfindung

Die beiden letztgenannten Lösungen bieten bereits eine wesentliche Gewichts- und Volumenersparnis. Aufgabe der Erfindung ist es, eine dem eingangs genannten technischen Gebiet zugehörende Batterie zu schaffen, welche ein noch geringeres Volumen einnimmt und bei welcher das Gewicht eines mit der Batterie versehenen Geräts weiter reduziert werden kann.

Die Lösung der Aufgabe ist durch die Merkmale des Anspruchs 1 definiert. Gemäss der Erfindung bilden die Aussenflächen des Batteriegehäuses im Wesentlichen die Form eines Hohlkörpers, welcher einen Aufnahmeraum zur Aufnahme zumindest eines wesentlichen Teils eines durch die Batterie zu versorgenden Geräts aufweist. Die äussere Mantelfläche des Batteriegehäuses kann somit einen Teil des Gerätegehäuses des Geräts bilden.

Das Batteriegehäuse umschliesst den aktiven Teil der Batterie (also insbesondere die Elektroden und den Elektrolyten sowie gegebenenfalls weitere Elemente) und schliesst diesen gegen die Aussenwelt und gegen das im durch die Gesamtform des Batteriegehäuses gebildeten Aufnahmeraum aufgenommenen Gerät, insbesondere gasdicht, ab. Im Querschnitt ergibt sich beispielsweise die Abfolge: äusserer Mantel des Batteriegehäuses - aktiver Teil der Batterie - innerer Mantel des Batteriegehäuses - Aufnahmeraum - innerer Mantel des Batteriegehäuses - aktiver Teil der Batterie - äusserer Mantel des Batteriegehäuses.

In die Batterie bzw. in den Aufnahmeraum werden nicht nur wie bei gewissen vorbekannten Lösungen Elemente zur elektrischen Kontaktierung (z. B. Kontaktstifte) und/oder zur mechanischen Befestigung der Batterie am Gerät aufgenommen, sondern weitere Komponenten des Geräts. Die Batterie kann derart dimensioniert sein, dass im Wesentlichen das gesamte Gerät im Aufnahmeraum aufgenommen werden kann, das Batteriegehäuse somit den wesentlichen Teil des Gehäuses für das Gerät bildet. Alternativ ragt ein Teil des Geräts aus dem Aufnahmeraum hinaus.

Das Batteriegehäuse schützt sowohl den darin eingeschlossenen aktiven Teil der Batterie (d. h. die Elektroden, den Elektrolyten und weitere Bestandteile) als auch die im Aufnahmeraum der Batterie aufgenommenen Komponenten des Geräts. Weil sich somit getrennte Geräte- und Batteriegehäuse weitgehend vermeiden lassen, resultiert eine Gewichts- und Volumenersparnis.

Bei herkömmlichen batteriegespeisten Geräten musste bei der Konzeption in der Regel ein Aufnahmeraum für die beispielsweise zylindrische oder im Wesentlichen quaderförmige Batterie im Innern des Gerätegehäuses vorgesehen werden. Dies hat die Gestaltungsfreiheit, insbesondere die Freiheit zur Anordnung der Gerätekomponenten, eingeschränkt. Wird eine erfindungsgemässe Batterie verwendet, können die Komponenten des Geräts in einem einfach zusammenhängenden Raum untergebracht werden. Neben verringertem Gewicht und Volumen aufgrund der eingesparten Gehäusewände ermöglicht die erfindungsgemässe Ausbildung der Batterie also auch eine grössere Gestaltungsfreiheit, die wiederum ein noch kompakteres und/oder ergonomischeres Design des Geräts ermöglicht. Die Form des Batteriegehäuses kann derart gewählt werden, dass es der gewünschten Form und der gewünschten Funktionalität des Geräts bestmöglich angepasst ist.

Die erfindungsgemässe Batterie eignet sich insbesondere zur Versorgung von miniaturisierten elektronischen Geräten wie z. B. Hörgeräten, mobilen automatischen Medikamentenspendern etc. Batterien für derartige Anwendungen weisen in der Regel einen Energieinhalt von 1 Ah oder weniger, insbesondere ca. 10 - 500 mAh, auf. Typische Dimensionen (z. B. Kantenlängen) einer solchen Batterie liegen im Bereich von 5 - 50 mm. Die Erfindung ist aber grundsätzlich auch bei kleineren oder grösseren Batterien anwendbar.

Mit Vorteil ist der Aufnahmeraum von aussen derart zugänglich, dass der im Aufnahmeraum aufzunehmende Teil des Geräts in diesen einschiebbar ist. Der Aufnahmeraum kann insbesondere als Vertiefung in der Gesamtform der Batterie ausgebildet sein. Diese ermöglicht ein einfaches Einschieben des Geräteteils (bzw. des Geräts), wonach der eingeschobene Teil des Geräts mit Ausnahme der Rückseite von der Batterie umschlossen und somit geschützt ist.

Bevorzugt bilden die Aussenflächen des Batteriegehäuses im Wesentlichen die Form eines Hohlzylinders. Ein Zylinder ist gemäss der allgemeinen Definition ein Körper, der von zwei parallelen, ebenen Flächen (Grund- und Deckfläche) und einer Mantel- bzw. Zylinderfläche, die von parallelen Geraden gebildet wird, begrenzt ist, d. h. er entsteht durch Verschiebung einer ebenen Leitkurve entlang einer Geraden, die nicht in dieser Ebene liegt. Es muss sich also nicht um einen geraden Zylinder und insbesondere nicht um einen Kreiszylinder handeln, die Leitkurve kann beispielsweise auch eine ovale oder unregelmässige Form aufweisen. Der Hohlzylinder ist insbesondere so ausgebildet, dass eine maximale Wandstärke des Hohlzylinders maximal ein Drittel beträgt eines minimalen Innendurchmessers (also des minimalen Durchmessers des Aufnahmeraums). Die Batterie ist in Bezug auf den Aufnahmeraum somit eher dünnwandig.

Eine hohlzylindrische Form ist von besonderem Vorteil, wenn die Elektrode der Batterie gewickelt ist. Der Wickel kann dann nämlich auf einfache Weise so ausgeführt werden, dass er den durch die Form des Batteriegehäuses gebildeten Aufnahmeraum umschlingt. Diese Anordnung ermöglicht die Herstellung einer dünnwandigen erfindungsgemässen Batterie mit hoher Energiedichte.

Eine gewickelte Elektrode kann grundsätzlich auch in einem nicht-hohlzylindrischen Gehäuse untergebracht werden. Andererseits ist es auch möglich, andersartig aufgebaute Batterien in dem erfindungsgemässen hohlkörperartigen Gehäuse, insbesondere in einem hohlzylindrischen Gehäuse, unterzubringen.

Bei einer gewickelten Elektrode beträgt ein Verhältnis zwischen einer Wickelbreite zu einer Wickelhöhe der gewickelten Elektrode mindestens 5:1. Unter Wickelbreite wird dabei die Breite der Elektrodenbänder, unter Wickelhöhe die Dicke der aufeinanderliegenden Elektrodenbänder und des Separators verstanden. Mit derartigen Dimensionen lassen sich kompakte Batteriegehäuse mit einer geringen Wandstärke (Gehäusedicke) herstellen.

Ein hohlzylindrisches Batteriegehäuse weist mit Vorteil eine erste Stirnfläche auf, in welcher ein Zugang zum Aufnahmeraum ausgebildet ist sowie eine zweite Stirnfläche, welche der ersten Stirnfläche gegenüberliegt und durch eine Deckelfläche abgeschlossen ist. Dies ermöglicht eine einfache Aufnahme des Geräts im Aufnahmeraum des Batteriegehäuses.

So kann ein Gerät beispielsweise eine Grundplatte aufweisen, insbesondere ein PCB (Printed Circuit Board), welche an der zugangsseitigen Stirnfläche der Batterie befestigbar ist. Die Komponenten des Geräts sind auf der Grundplatte aufgebaut und in zusammengesetztem Zustand im Aufnahmeraum der Batterie aufgenommen. Die Komponenten des Geräts sind also durch die Grundplatte des Geräts sowie durch die Mantelflächen und die Deckelfläche des Batteriegehäuses allseitig geschützt. Die Grundplatte des Geräts kann je nach Bedarf noch durch einen Gerätedeckel abgedeckt werden. Letzterer kann Öffnungen für Anzeige- oder Bedienelemente des Geräts aufweisen.

Die Komponenten des Geräts umfassen vorzugsweise eine Sicherheitsschaltung, eine Ladeschaltung und eine Übertragungsspule zur drahtlosen Ladung der Batterie sowie gerätespezifische weitere Komponenten (z. B. eine Steuerung, ein Mikrophon, einen Verstärker, einen Lautsprecher, eine Pumpe etc.).

Die Grundplatte wird an der aufnahmeseitigen Stirnseite mit Vorteil verschraubt, was eine sichere, einfache und wieder lösbare Befestigung ermöglicht. Die Verschraubung kann mit Schrauben erfolgen, die durch eine Öffnung in der Grundplatte geführt werden und in einem Innengewinde am Batteriegehäuse verschraubt sind. Falls das Batteriegehäuse in der Form eines geraden, kreisförmigen Hohlzylinders ausgebildet ist, kann auch direkt in der inneren Mantelfläche des Batteriegehäuses ein Gewinde ausgebildet sein, an welchem sich die Grundplatte über ein passend daran ausgebildetes oder angebrachtes Aussengewinde festschrauben lässt.

Es sind auch andere Befestigungsarten der Grundplatte am Batteriegehäuse denkbar, beispielsweise eine Clipverbindung oder eine nicht lösbare Verbindung wie eine Schweissverbindung.

Mit Vorteil erfolgt durch die Befestigung des Geräts an der Batterie gleichzeitig die elektrische Kontaktierung mit Kontaktanschlüssen der Batterie. Dazu können bei einer ersten Ausführungsform die Kontaktanschlüsse auf der ersten Stirnfläche der Batterie angeordnet sein, d. h. auf derjenigen Stirnfläche, in welcher der Zugang zum Aufnahmeraum ausgebildet ist. Die Kontaktstellen des Geräts sind insbesondere an einer entsprechenden Position auf der Innenfläche einer Grundplatte des Geräts ausgebildet. Eine derartige Kontaktierung kann sehr platzsparend und einfach erfolgen.

In einer weiteren Ausführungsform sind die Kontaktanschlüsse auf einer an den Aufnahmeraum angrenzenden Aussenfläche des Batteriegehäuses angeordnet. Sie werden durch entsprechende Kontaktflächen der Grundplatte bzw. des Geräts kontaktiert. Diese Variante ermöglicht eine flexible Anordnung der Kontaktflächen am Gerät. Die Kontaktflächen sind zudem optimal im Innern der hohlkörperartigen Batterie geschützt.

Bevorzugt ist das Batteriegehäuse aus einem äusseren Gehäuseteil und einem inneren Gehäuseteil zusammengesetzt. Die beiden Gehäuseteile sind insbesondere miteinander gasdicht verschweisst. Ein derartiger Aufbau ist gleichzeitig einfach und stabil. Bei einer gewickelten Batterie kann der Wickel einfach in den äusseren Gehäuseteil eingesetzt werden, wonach der innere Gehäuseteil eingeführt wird. Durch zwei gasdichte Schweissnähte lassen sich die beiden Teile sicher verbinden. Bei einem Batteriegehäuse in der Form eines einseitig stirnseitig abgeschlossenen Hohlzylinders kann der äussere Gehäuseteil insbesondere die äussere Mantelfläche sowie den stirnseitigen Abschluss bilden, während der innere Gehäuseteil die innere Mantelfläche sowie die der abgeschlossenen Stirnseite gegenüberliegende ringförmige Stirnfläche bildet.

Als Alternative sind auch Gehäuse denkbar, die anders aufgeteilt sind oder die aus mehr als zwei Teilen bestehen. Die Verbindung der Gehäuseteile kann auch auf andere Weise erfolgen, beispielsweise durch gasdichte Klebeverbindungen oder indem mit gasdichten Dichtelementen versehende Teile miteinander verschraubt werden.

Die äussere Mantelfläche des Batteriegehäuses, insbesondere das ganze Batteriegehäuse, ist mit Vorteil aus einem gasdichten und chemikalienbeständigen Kunststoff gefertigt. Als geeignete Kunststoffe werden insbesondere flüssigkristalline Polymere (LCP, liquid crystalline polymer) vorgeschlagen (im Handel beispielsweise als Zenite® oder Vectra® erhältlich). Diese Materialien sind bei geringem Gewicht äusserst steif und dauerhaft, zudem chemikalienbeständig. Kommt das Gerät direkt mit der Haut eines Trägers in Kontakt (wie z. B. ein Hörgerät), sollte zudem ein hautverträglicher Kunststoff zum Einsatz gelangen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Explosionsdarstellung einer erfindungsgemässen Batterie und eines dadurch versorgten Geräts;
- Fig. 2: ein Schrägbild der Batterie; und
- Fig. 3: eine Explosionsdarstellung der Batterie.

Grundsätzlich sind in den Figuren gleiche Teile mit gleichen Bezugszeichen versehen.

### Wege zur Ausführung der Erfindung

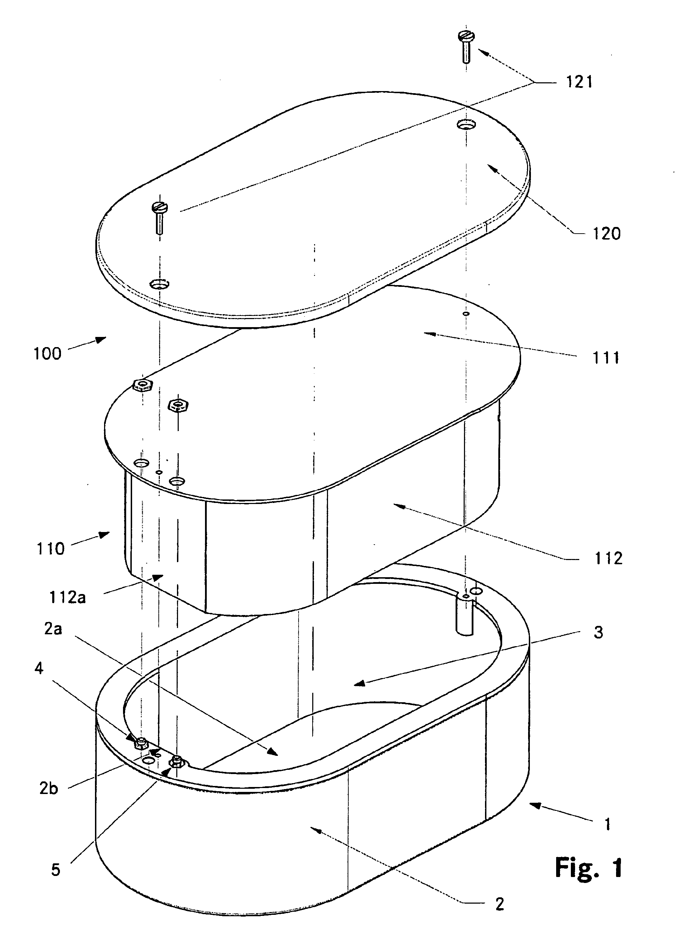

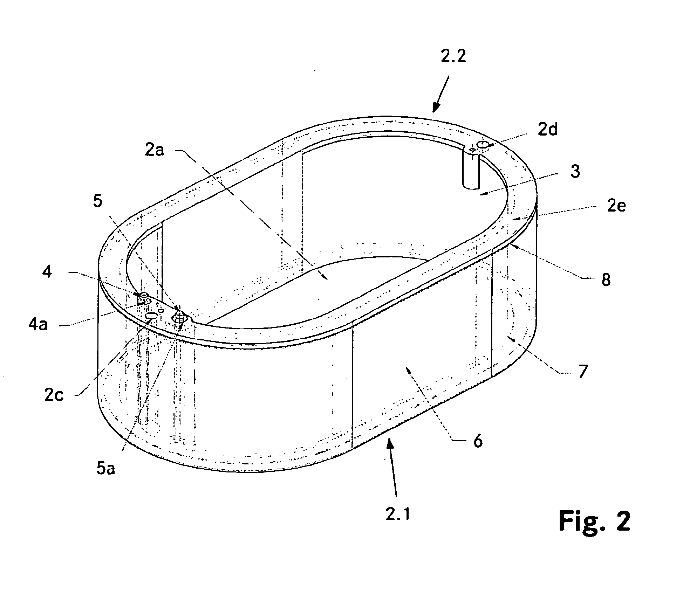

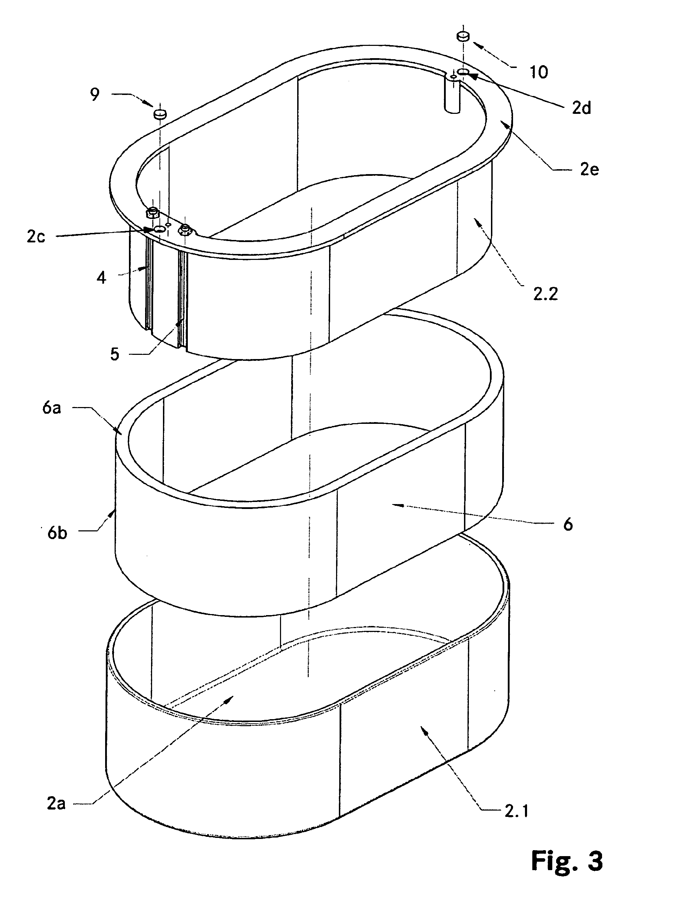

Die Figur 1 zeigt eine Explosionsdarstellung einer erfindungsgemässen Batterie und eines dadurch versorgten Geräts. Die Form der Batterie 1 entspricht im Wesentlichen einem geraden Hohlzylinder mit einer Grundfläche in der Form eines ovalen Rings. Die Länge des Ovals verhält sich zur Breite ungefähr wie 2:1. Die Batterie umfasst ein entsprechend hohlzylindrisch ausgeformtes Batteriegehäuse 2, welches mantelartig einen Aufnahmeraum 3 umgibt. Das Batteriegehäuse 2 ist derart ausgebildet, dass die Wandstärke des Hohlzylinders ungefähr 1/8 der Breite des Aufnahmeraums entspricht. Es handelt sich um eine kompakte Batterie mit geringen geometrischen Abmessungen; sie ist z. B. einige Millimeter (z. B. bis zu 20 mm) hoch und mehrere (z. B. 10 bis 30 mm) Millimeter breit. Sie weist eine Kapazität von beispielsweise ca. 300 mAh auf. Das Batteriegehäuse umfasst eine untere Deckelfläche 2a, welche den Aufnahmeraum 3 nach unten hin dicht abschliesst. Die untere Deckelfläche 2a kann in ihrem an den Aufnahmeraum 3 angrenzenden Bereich - je nach Bedarf - Kabel- resp. Schlauchdurchführungen enthalten. Im Randbereich der der Deckelfläche 2a gegenüber liegenden Stirnseite ragen ein Ableiterstift 4 für den Pluspol sowie ein Ableiterstift 5 für den Minuspol aus dem Batteriegehäuse 2 hinaus. Die Batterie 1 ist in den Figuren 2 und 3 im Detail dargestellt und im Zusammenhang mit diesen Figuren auch näher beschrieben.

Das Gerät 100 umfasst einen Einsatz 110 sowie einen Gerätedeckel 120. Der Einsatz 110 umfasst eine durch ein PCB (Printed Circuit Board) gebildete Grundplatte 111, auf welcher die Komponenten des Geräts (insbesondere elektronische Bauteile wie einerseits eine Sicherheitsschaltung und eine induktive Ladeschaltung inkl. Übertragungsspule und andererseits gerätespezifische Komponenten wie eine Pumpe, ein Mikrophon, ein Magnet, Bedienungselemente etc.) aufgebaut sind. In der dargestellten Version sind die Komponenten durch eine dünne Gehäusewand 112 umschlossen, wobei ein ringförmiger Bereich der Grundplatte 111 über die Gehäusewand 112 hinaussteht. Weil in zusammengebautem Zustand (d. h. beim Einsatz des Geräts) die Schutzfunktion für das Gerät 100 in diesem Bereich von der Batterie 1 wahrgenommen wird, kann auf diese Gehäusewand 112 im Prinzip auch verzichtet werden oder sie kann mit einer deutlich geringeren Höhe ausgeführt werden.

Der Einsatz 110 ist derart ausgebildet, dass er sich passend in den durch das Batteriegehäuse 2 gebildeten Aufnahmeraum 3 einsetzen lässt, wobei durch eine Abflachung 112a der Gehäusewand 112, die mit einer Abflachung 2b des Batteriegehäuses 2 zusammenwirkt, sichergestellt ist, dass sich der Einsatz 110 nur in einer Ausrichtung in den Aufnahmeraum führen lässt. In eingesetztem Zustand des Einsatzes 110 stützt sich der über die Gehäusewand 112 hinausstehende ringförmige Bereich der Grundplatte 111 auf dem Batteriegehäuse 2 ab. In diesem Bereich sind zudem vier Bohrungen ausgebildet. Durch zwei dieser Bohrungen treten die über das Batteriegehäuse 2 hinausstehenden Ableiterstifte 4, 5 hindurch. Die Ableiter sind gemäss der europäischen Patentanmeldung EP 1 398 841 A1 (Wyon AG) ausgeführt, d. h. sie ermöglichen eine gasdichte, mechanisch spannbare Verbindung zwischen einem äusseren Kontaktanschluss und den innen im Batteriegehäuse 2 angeordneten Ableiterstiften. Im vorliegenden Fall sind die Ableiterstifte 4, 5 röhrchenförmig und weisen ein Innengewinde auf, in welches ein Gewindestab eingeschraubt ist. Das freie Ende des letzteren ragt in zusammengebautem Zustand der Batterie 1 auf die Aussenseite des Batteriegehäuses 2 hinaus. Auf den entsprechenden Abschnitt lassen sich passende Muttern aufschrauben, so dass die an den Ableiterstiften gehaltene Wicklung und damit die Batterie 2 fest mit dem Einsatz 110 verschraubt werden. Mit der Verschraubung wird auch die Verbindung des Geräts 100 zum Minus- bzw. Pluspol hergestellt.

Durch die zwei weiteren Öffnungen in der Grundplatte 111 kann der Gerätedeckel 120 mit der Batterie 1 verschraubt werden, indem von der Aussenseite des Gerätedeckels 120 zwei metrische Schrauben 121 durch Öffnungen im Gerätedeckel 120 und die erwähnten Öffnungen in der Grundplatte 111 hindurch in Aufnahmen mit Innengewinde geführt werden, die im Batteriegehäuse 2 ausgebildet sind. Nach deren Festziehen sind die Köpfe der Schrauben 121 in entsprechenden Aufnahmen im Gehäusedeckel 120 versenkt. Nach Anbringen des Gerätedeckels 120 sind die funktionalen Komponenten des Geräts 100 allseitig gut geschützt. Der Gehäusedeckel 120 deckt zudem die leitend mit der Batterie 1 verbundenen Ableiterstifte 4, 5 bzw. die darauf aufgeschraubten Muttern ab. Weiter können im Gerätedeckel 120 Aussparungen für Bedienungs- und Anzeigeelemente des Geräts 100 vorgesehen sein.

Die Figur 2 zeigt ein Schrägbild, ,die Figur 3 eine Explosionsdarstellung der Batterie 1. Im Batteriegehäuse 2 sind die aktiven Komponenten der Batterie 1 untergebracht, nämlich ein in an sich bekannter Weise aufgebauter Wickel 6 bestehend aus einem Anodenband und einem Kathodenband, zwischen denen ein Separatorband angeordnet ist. Die Bänder sind derart dimensioniert, dass ein Verhältnis der Wickelbreite 6b zur Wickelhöhe 6a ca. 5:1 beträgt (siehe Figur 3). Die Trägerfolie des Kathodenbands ist direkt an den ersten metallischen Ableiterstift 4 angeschweisst, die Trägerfolie des Kathodenbands an den zweiten metallischen Ableiterstift 5, wodurch eine einfache und sichere Verbindung geschaffen wird. Von einem Ableiterstift können auch zwei Bänder (zwei Anoden- oder zwei Kathodenbänder) ausgehen. Auch doppelseitig beschichtete Bänder können verwendet werden. Der Wickel 6 ist mit einem Elektrolyten getränkt. Die Ableiterstifte 4, 5 sind am Batteriegehäuse 2 mittels Befestigungsmuttern 4a, 5a gehalten, die auf der Gehäuseaussenseite mit den Aussengewinden im Bereich des freien Endes der Ableiterstifte 4, 5 verschraubt sind.

Das Batteriegehäuse 2 ist aus zwei Teilen aus einem für diese Anwendung geeigneten flüssigkristallinen Polymer (LCP) zusammengesetzt (siehe insbesondere Figur 3). Der Kunststoff ist gasdicht und kann mit einer Metallisierung zur Dampfsperre versehen sein. Der erste (äussere) Gehäuseteil 2.1 bildet den äusseren Mantel sowie die untere stirnseitige Deckelfläche 2a. Der zweite (innere) Gehäuseteil 2.2 bildet den inneren Mantel sowie die der Deckelfläche 2a gegenüber liegende ringförmige Stirnfläche 2e. Im zweiten Gehäuseteil 2.2 sind die bereits oben erwähnte, an den Aufnahmeraum 3 grenzende Abflachung 2b ausgebildet, die Öffnungen zur Aufnahme der Schrauben 121 zum Befestigen des Gerätedeckels 120, ausserdem zwei Aufnahmen und Durchführungsöffnungen für die Ableiterstifte 4, 5. Der zweite Gehäuseteil 2.2 weist zudem zwei Öffnungen 2c, 2d in der ringförmigen Stirnfläche auf.

Der Zusammenbau der Batterie 1 gestaltet sich wie folgt: Zunächst wird der Wickel 6 in den ersten Gehäuseteil 2.1 eingesetzt, wobei die Ableiterstifte 4, 5 mit ihren freien Enden aus dem Wickel 6 nach oben hinausragen. Nun kann der zweite Gehäuseteil 2.2 aufgesetzt werden, wobei die freien Enden der Ableiterstifte 4, 5 durch die entsprechenden Öffnungen im zweiten Gehäuseteil 2.2 nach aussen hindurchtreten. Die Gehäuse werden nun mittels zweier gasdichter Schweissnähte miteinander verbunden. Die innere gasdichte Schweissnaht 7 verläuft zwischen dem unteren Abschluss der inneren Mantelfläche des zweiten Gehäuseteils 2.2 und der Bodenfläche des ersten Gehäuseteils 2.1. Die äussere gasdichte Schweissnaht 8 verläuft zwischen dem freien Ende der ringförmigen Stirnfläche des zweiten Gehäuseteils 2.2 und der freien Kante des ersten Gehäuseteils 2.1. Mit Hilfe der bereits erwähnten Befestigungsmuttern lässt sich nun der Wickel 6 am Batteriegehäuse 2 fixieren, wobei die Durchführung gemäss EP 1 398 841 A1 (Wyon AG) gleichzeitig gasdicht abgeschlossen wird.

Als Nächstes kann durch die erste Öffnung 2c in der ringförmigen Stirnfläche der Elektrolyt eingefüllt werden, wobei der Innenraum des Batteriegehäuses 2 durch die zweite Öffnung 2d entlüftet wird. Nach dem Einfüllen des Elektrolyten werden die beiden Öffnungen durch das Einschweissen von Verschlussdeckeln 9, 10 dauerhaft verschlossen. Die Batterie 2 ist in der Folge zur Benutzung bereit.

Die Erfindung beschränkt sich nicht auf das dargestellte Ausführungsbeispiel. Die Form und Konstruktion der Batterie kann beispielsweise auch anders gewählt werden, um Anforderungen an die Gerätegrösse oder die Ergonomie des Geräts Rechnung zu tragen. Die Batterie muss beispielsweise nicht zwingend einen konstanten Querschnitt aufweisen, sondern dieser kann sich beispielsweise in Richtung zur aufnahmeseitigen Stirnseite erweitern. Die Form der Grundfläche kann auch anders sein, z. B. rund oder im Wesentlichen rechteckig. Das Batteriegehäuse kann aus zwei Komponenten bestehen und beispielsweise in einem Insert-Molding-Verfahren hergestellt werden. Aussen am Batteriegehäuse können auch zusätzliche dekorative oder informative Elemente angebracht werden.

Weiter können die Ableiter statt zur aufnahmeraumseitigen Stirnseite der Batterie auch direkt zum Aufnahmeraum, also zur inneren Mantelfläche des Batteriegehäuses führen, wo die Kontakte für das Gerät ausgebildet sind. Dadurch kann die Grundplatte des Geräts entfallen bzw. der Gerätedeckel direkt am Gerät ausgebildet werden. Anstelle einer Schraubverbindung kann der Gerätedeckel (oder die Grundplatte) auch mit der aufnahmeseitigen Stirnfläche des Batteriegehäuses verschweisst werden.

Bei einer weiteren Ausführungsform sind die Ableiter ausserhalb des Batteriegehäuses als Stecker ausgebildet. Die entsprechenden Buchsen werden mit Vorteil auf der Grundplatte des Geräts angebracht.

Zusammenfassend ist festzustellen, dass durch die eine Batterie geschaffen wird, welche verglichen mit dem Stand der Technik ein noch geringeres Volumen einnimmt und bei welcher das Gewicht eines mit der Batterie versehenen Geräts weiter reduziert werden kann.

## Patentansprüche

1. Batterie (1) umfassend ein Batteriegehäuse (2) und eine im Batteriegehäuse aufgenommene Elektrode (6), **dadurch gekennzeichnet, dass** Aussenflächen des Batteriegehäuses (2) im Wesentlichen die Form eines Hohlkörpers bilden, welcher einen Aufnahmeraum (3) zur Aufnahme zumindest eines wesentlichen Teils eines durch die Batterie zu versorgenden Geräts (100) aufweist, so dass eine äussere Mantelfläche des Batteriegehäuses (2) einen Teil eines Gerätegehäuses des Geräts (100) bilden kann.

2. Batterie nach Anspruch 1, **dadurch gekennzeichnet, dass** der Aufnahmeraum (3) von aussen derart zugänglich ist, dass der Teil des Geräts (100) in diesen einschiebbar ist.

3. Batterie nach Anspruch 1 oder 2, **dadurch gekennzeichnet, dass** die Aussenflächen des Batteriegehäuses (2) im Wesentlichen die Form eines Hohlzylinders bilden.

4. Batterie nach Anspruch 3, **dadurch gekennzeichnet, dass** das Batteriegehäuse (2) eine erste Stirnfläche (2e) aufweist, in welcher ein Zugang zum Aufnahmeraum (3) ausgebildet ist sowie eine zweite Stirnfläche (2a), welche der ersten Stirnfläche (2e) gegenüberliegt und durch eine Deckelfläche abgeschlossen ist.

5. Batterie nach Anspruch 4, **dadurch gekennzeichnet, dass** Kontaktanschlüsse auf der ersten Stirnfläche (2e) der Batterie (1) angeordnet sind.

6. Batterie nach einem der Ansprüche 1 bis 4, **dadurch gekennzeichnet, dass** Kontaktanschlüsse auf einer an den Aufnahmeraum angrenzenden Aussenfläche des Batteriegehäuses angeordnet sind.

7. Batterie nach einem der Ansprüche 1 bis 6, **dadurch gekennzeichnet, dass** das Batteriegehäuse (2) aus einem äusseren Gehäuseteil (2.1) und einem inneren Gehäuseteil (2.2) zusammengesetzt ist, wobei die beiden Gehäuseteile (2.1, 2.2) insbesondere miteinander gasdicht verschweisst sind.

8. Batterie nach einem der Ansprüche 1 bis 7, **dadurch gekennzeichnet, dass** die äussere Mantelfläche des Batteriegehäuses (2) aus einem gasdichten und chemikalienbeständigen Kunststoff, insbesondere aus einem LCP, gefertigt ist.

9. Batterie nach einem der Ansprüche 1 bis 8, **dadurch gekennzeichnet, dass** die Elektrode gewickelt ist, wobei ein Wickel (6) der gewickelten Elektrode den Aufnahmeraum (3) umschlingt.

10. Batterie nach Anspruch 9, **dadurch gekennzeichnet, dass** ein Verhältnis zwischen einer Wickelbreite (6b) zu einer Wickelhöhe (6a) der gewickelten Elektrode (6) mindestens 5:1 beträgt.

11. Gerät (100) mit einer Batterie nach einem der Ansprüche 1 bis 10, **dadurch gekennzeichnet, dass** in zusammengesetztem Zustand ein wesentlicher Teil des Geräts (100) im Aufnahmeraum (3) der Batterie (1) aufgenommen ist.

12. Gerät nach Anspruch 11, **dadurch gekennzeichnet, dass** das Gerät (100) eine Grundplatte (111), insbesondere ein PCB, aufweist, welche an einer zugangsseitigen Stirnfläche (2e) der Batterie (1) lösbar befestigbar, insbesondere verschraubbar, ist, wobei Komponenten des Geräts (100) auf der Grundplatte (111) aufgebaut sind und wobei in zusammengesetztem Zustand die Komponenten im Aufnahmeraum der Batterie (1) aufgenommen sind und von Kontaktanschlüssen der Batterie (1) elektrisch kontaktiert werden.

13. Gerät nach Anspruch 12, **dadurch gekennzeichnet, dass** die Komponenten eine Sicherheitsschaltung, eine Ladeschaltung und eine Übertragungsspule umfassen.

## Claims

1. Battery (1) comprising a battery housing (2) and an electrode (6) which is accommodated in the battery housing, **characterized in that** outer faces of the battery housing (2) substantially form the shape of a hollow body which has an accommodation space (3) for accommodating at least a substantial portion of a device (100) which is to be supplied with power by the battery, so that an outer casing surface of the battery housing (2) can form a portion of a housing of the device (100).

2. Battery according to Claim 1, **characterized in that** the accommodation space (3) is accessible from the outside in such a way that the portion of the device (100) can be inserted into said accommodation space.

3. Battery according to Claim 1 or 2, **characterized in that** the outer faces of the battery housing (2) substantially form the shape of a hollow cylinder.

4. Battery according to Claim 3, **characterized in that** the battery housing (2) has a first end face (2e) in which an entrance to the accommodation space (3) is formed, and a second end face (2a) which is situated opposite the first end face (2e) and is closed off by a covering face.

5. Battery according to Claim 4, **characterized in that** contact connections are arranged on the first end face (2e) of the battery (1).

6. Battery according to one of Claims 1 to 4, **characterized in that** contact connections are arranged on an outer face of the battery housing which adjoins the accommodation space.

7. Battery according to one of Claims 1 to 6, **characterized in that** the battery housing (2) is composed of an outer housing part (2.1) and an inner housing part (2.2), with the two housing parts (2.1, 2.2) being welded to one another in a gas-tight manner in particular.

8. Battery according to one of Claims 1 to 7, **characterized in that** the outer casing surface of the battery housing (2) is produced from a gas-tight and chemicals-resistant plastic, in particular from an LCP.

9. Battery according to one of Claims 1 to 8, **characterized in that** the electrode is wound, with a winding (6) of the wound electrode wrapping around the accommodation space (3).

10. Battery according to Claim 9, **characterized in that** a ratio between a winding width (6b) and a winding height (6a) of the wound electrode (6) is at least 5:1.

11. Device (100) with a battery according to one of Claims 1 to 10, **characterized in that** a substantial portion of the device (100) is accommodated in the accommodation space (3) of the battery (1) in the assembled state.

12. Device according to Claim 11, **characterized in that** the device (100) has a base plate (111), in particular a PCB, which can be releasably fixed, in particular screw-connected, on an entrance-side end face (2e) of the battery (1), with components of the device (100) being mounted on the base plate (111), and with the components being accommodated in the accommodation space of the battery (1) in the assembled state and being electrically contacted by contact connections of the battery (1).

13. Device according to Claim 12, **characterized in that** the components comprise a safety circuit, a charging circuit and a transmission coil.

## Revendications

1. Batterie (1) comprenant un boîtier de batterie (2) et une électrode (6) logée dans le boîtier de batterie, **caractérisée en ce que** les surfaces extérieures du boîtier de batterie (2) forment pour l'essentiel la forme d'un corps creux qui présente un espace d'accueil (3) destiné à recevoir au moins une partie importante d'un appareil (100) à alimenter par la batterie, de sorte qu'une surface d'enveloppe extérieure du boîtier de batterie (2) peut former une partie d'un boîtier d'appareil de l'appareil (100).

2. Batterie selon la revendication 1, **caractérisée en ce que** l'espace d'accueil (3) est accessible depuis l'extérieur de telle sorte que la partie de l'appareil (100) peut être insérée dans celui-ci.

3. Batterie selon la revendication 1 ou 2, **caractérisée en ce que** les surfaces extérieures du boîtier de batterie (2) forment pour l'essentiel la forme d'un cylindre creux.

4. Batterie selon la revendication 3, **caractérisée en ce que** le boîtier de batterie (2) présente une première surface frontale (2e) dans laquelle est formé un accès à l'espace d'accueil (3) ainsi qu'une deuxième surface frontale (2a) qui se trouve à l'opposé de la première surface frontale (2e) et qui est fermée par une surface de couvercle.

5. Batterie selon la revendication 4, **caractérisée en ce que** des bornes de contact sont disposées sur la première surface frontale (2e) de la batterie (1).

6. Batterie selon l'une des revendications 1 à 4, **caractérisée en ce que** des bornes de contact sont disposées sur une surface extérieure du boîtier de batterie juxtaposée à l'espace d'accueil.

7. Batterie selon l'une des revendications 1 à 6, **caractérisée en ce que** le boîtier de batterie (2) est constitué d'une partie extérieure de boîtier (2.1) et d'une partie intérieure de boîtier (2.2), les deux parties de boîtier (2.1, 2.2) étant soudées entre elles, notamment de manière hermétique.

8. Batterie selon l'une des revendications 1 à 7, **caractérisée en ce que** la surface d'enveloppe extérieure du boîtier de batterie (2) est fabriquée dans une matière plastique hermétique et résistante aux produits chimiques, notamment un polymère à cristaux liquides.

9. Batterie selon l'une des revendications 1 à 8, **caractérisée en ce que** l'électrode est bobinée, un enroulement (6) de l'électrode bobinée entourant l'espace d'accueil (3).

10. Batterie selon la revendication 9, **caractérisée en ce qu'**un rapport entre une largeur d'enroulement (6b) et une hauteur d'enroulement (6a) de l'électrode bobinée (6) est au moins égal à 5:1.

11. Appareil (100) muni d'une batterie selon l'une des revendications 1 à 10, **caractérisé en ce qu'**en situation assemblée, une partie importante de l'appareil (100) est accueillie dans l'espace d'accueil (3) de la batterie (1).

12. Appareil selon la revendication 11, **caractérisé en ce que** l'appareil (100) présente une plaque de base (111), notamment un circuit imprimé, qui peut être fixée, notamment vissée, de manière amovible sur une surface frontale (2e) côté accessible de la batterie (1), des composants de l'appareil (100) étant montés sur la plaque de base (111) et, en situation assemblée, les composants étant accueillis dans l'espace d'accueil de la batterie (1) et étant mis en contact électrique avec les bornes de contact de la batterie (1).

13. Appareil selon la revendication 12, **caractérisé en ce que** les composants comprennent un circuit de sécurité, un circuit de charge et une bobine de transmission.
